# EUROPEAN PATENT APPLICATION

(11) **EP 3 730 305 A1**
(43) Date of publication of application: **28.10.2020**
(21) Application number: 17935752.0
(22) Date of filing: 21.12.2017
(51) Int. Cl.: B41M 5/00, C09D 11/54

(54) **PRETREATMENT LIQUID FOR INK-JET RECORDING, PRODUCTION METHOD THEREFOR, INK-JET RECORDING LIQUID SET, PRINTED MATTER, AND INK-JET RECORDING METHOD**

(71) Applicant: KONICA MINOLTA, INC., Tokyo 100-7015 (JP)
(72) Inventor: MORIYAMA, Haruka, Tokyo 100-7015 (JP); TOEDA, Takayuki, Tokyo 100-7015 (JP); TAGORI, Hirotaka, Tokyo 100-7015 (JP)
(74) Representative: Hoffmann Eitle
(86) International application number: PCT/JP2017/045884
(87) International publication number: WO 2019/123597

(57) **Abstract**

The present invention addresses the problem of providing: a pretreatment liquid for ink-jet recording, the pretreatment liquid being excellent in terms of storage stability, blooming inhibition, ink running prevention, and ink adhesion; a method for producing the pretreatment liquid; an ink-jet recording liquid set; printed matter; and an inkjet recording method. The pretreatment liquid for ink-jet recording of the present invention comprises water-insoluble resin microparticles, a coagulant, and water, and is characterized in that the water-insoluble resin microparticles comprise a composite resin comprising a polyurethane-based resin which contains a polyolefin-based resin.

## Description

### Technical Field

The present invention relates to a pretreatment liquid for inkjet recording, a method of manufacturing the same, an inkjet recording liquid set, a printed material, and an inkjet recording method. More particularly the present invention relates to a pretreatment liquid for inkjet recording which is excellent in storage stability, blooming suppression property, ink bleeding prevention, and ink adhesiveness, a method of manufacturing the same, an inkjet recording liquid set, a printed material, and an inkjet recording method.

### Background

Since the inkjet recording method can easily and inexpensively produce an image, it has been applied to various printing fields such as photography, various types of printing, marking, and special printing such as color filters in recent years.

Also in the soft packaging field, there has been a trend of diversification of small lots, and digital printing such as inkjet recording method has attracted attention.

Among the soft packaging fields, there is known a method of printing with ink after a pretreatment liquid containing a fixing resin such as urethane or olefin is applied in order to secure fixing property on a non-absorptive base material (for example, see Patent Documents 1 to 4). In order to improve image quality in high-speed printing, a method of applying a pretreatment liquid containing a coagulant is known (for example, see Patent Document 5).

However, when a pretreatment liquid in which resin particles of urethane type, or olefin type, and an amount of a coagulant necessary for immobilizing an ink are mixed is prepared for high-speed printing on a non-absorptive base material, there is a problem that the storage stability of the pretreatment liquid over time at high temperature deteriorates. In addition, when the pretreatment liquid is applied to the non-absorptive base material, there has been a problem of image quality deterioration in that blooming (a phenomenon in which a resin or a coagulant precipitates and crystallizes on an image surface) occurs, ink bleeds, ink adhesiveness is inferior, and ink is peeled off from the base material.

### Prior art Documents

### Patent Documents

Patent Document 1: JP-A 2016-30337
Patent Document 2: JP-A2017-125158
Patent Document 3: Japanese Patent No. 6007261
Patent Document 4: JP-A2014-19811
Patent Document 5: JP-A 2009-107256

### Summary of the Invention

### Problems to be solved by the Invention

The present invention has been made in view of the above problems and situation. An object of the present invention is to provide a pretreatment liquid for inkjet recording, which is excellent in storage stability, blooming suppression property, ink bleeding prevention, and ink adhesiveness, a manufacturing method thereof, an inkjet recording liquid set, a printed material, and an inkjet recording method.

### Means to solve the Problems

In order to solve the above-mentioned problems, the present inventor has found that an inkjet recording pretreatment liquid excellent in storage stability, blooming suppression property, ink bleeding prevention, and ink adhesiveness can be obtained by an aqueous inkjet recording pretreatment liquid containing, as water insoluble resin fine particles, composite resin particles in which a polyolefin resin is contained in a polyurethane resin and a coagulant.

That is, the above-mentioned problem according to the present invention is solved by the following means.

1. A pretreatment liquid for inkjet recording containing at least water-insoluble resin particles, a coagulant and water, wherein the water-insoluble resin particles contain a composite resin in which a polyolefin resin is contained in a polyurethane resin.

2. The pretreatment liquid for inkjet recording according to item 1, wherein the water-insoluble resin particles contain a composite resin in which a polyolefin resin is emulsified in a polyurethane resin.

3. The pretreatment liquid for inkjet recording according to item 1 or 2, wherein a value of a mass ratio (U/O) of the polyurethane resin (U) and the polyolefin resin (O) in the composite resin particles is in the range of 40/60 to 95/5.

4. The pretreatment liquid for inkjet recording according to any one of items 1 to 3, wherein a polyol component of the polyurethane resin has a carbonate group or an ether group.

5. The pretreatment liquid for inkjet recording according to any one of items 1 to 4, wherein the coagulant is a polyvalent metal salt or an organic acid.

6. An inkjet recording liquid set comprising a pretreatment liquid for inkjet recording and an inkjet recording ink containing at least a pigment, an organic solvent, and water, wherein the pretreatment liquid for inkjet recording is one described in any one of items 1 to 5, and the coagulant contained in the pretreatment liquid for inkjet recording is a substance which coagulates a pigment contained in the inkjet recording ink.

7. A method of producing the pretreatment liquid for inkjet recording according to any one of items 1 to 5, comprising the steps of: forming composite resin particles by emulsifying and dispersing a polyolefin resin and a polyurethane resin; and mixing the composite resin particles and the coagulant.

8. A printed material comprising a printed layer formed using an inkjet recording ink on a pretreatment layer formed using the pretreatment liquid for inkjet recording according to any one of items 1 to 5 on a non-absorptive film base material.

9. An inkjet recording method comprising the step of forming an image on a non-absorptive film base material using the pretreatment liquid for inkjet recording according to any one of items 1 to 5 or the inkjet recording liquid set according to item 6.

### Effects of the Invention

According to the above-mentioned means of the present invention, it is possible to provide a pretreatment liquid for inkjet recording excellent in storage stability, blooming suppression property, ink bleeding prevention, and ink adhesiveness, a method of manufacturing the same, an inkjet recording liquid set, a printed material and an inkjet recording method.

The expression mechanism or action mechanism of the effect of the present invention is not clarified, but is inferred as follows.

When a pretreatment liquid for inkjet recording is produced by simply mixing polyurethane resin particles and polyolefin resin particles, which are water-insoluble resin particles, and an amount of a coagulant necessary for pinning a high-concentration image, the storage stability of the pretreatment liquid will be deteriorated. In addition, when this pretreatment liquid is applied to the base material, blooming will occur.

As a result of examination by the present inventors, it has been found that the above problem can be solved by employing a composite resin particle in which a polyolefin resin is contained in a polyurethane resin as the water-insoluble resin particles. Hereinafter, the estimated mechanism will be described.

<Storage Stability of Pretreatment liquid>

Because of the difference in polarity between the polyurethane resin particles and the polyolefin resin particles contained as water-insoluble resin particles in the pretreatment liquid, it is inferred that the stability is low by simply mixing them. Further, when the coagulant is mixed therein, the compatibility between the polyolefin resin particles and the coagulant is low, so that the coagulant precipitates and the storage stability of the pretreatment liquid cannot be maintained. However, when a composite resin particle is produced with the polyolefin resin contained in the polyurethane resin, the contacting member with the coagulant in the pretreatment liquid is a urethane resin having high compatibility with the coagulant, and it is presumed that the stability of the pretreatment liquid is improved by the effect of the compatibility.

A value of the mass ratio (U/O) of the polyurethane resin (U) and the polyolefin resin (O) in the composite resin is preferably within the range of 40/60 to 95/5. Since the olefinic resin is a non-polar site, it is preferable to use the above composite ratio because the stability is poor when the composition ratio of the olefinic resin is increased.

### <Blooming after coating pre-treatment liquid to base material>

By utilizing the composite resin particles in the pretreatment liquid, it is surprisingly possible to suppress blooming after applying the pretreatment liquid to the base material.

As a presumed mechanism, the following is conceivable. When the pretreatment liquid is a mixture resin particle liquid of polyurethane resin particles and polyolefin resin particles, when the pretreatment liquid is applied to the base material, the coagulant exists at the interface between the polyurethane resin and the polyolefin resin, which has low interaction due to different polarities. Then, the coagulant cannot be immobilized in the resin film, and blooming tends to occur.

On the other hand, when a composite resin particle is prepared in a form in which the polyolefin resin is contained in the polyurethane resin, the coagulant exists at the interface between the polyurethane resins which are highly compatible and capable of interacting by hydrogen bonding. Therefore, it is presumed that the coagulant is immobilized in the resin film, and blooming hardly occurs.

By setting the resin mass ratio of the composite resin particles within the above range, hydrogen bonds are strongly formed between the polyurethane resin particles in the composite resin particles. As a result, the coagulant is also strongly immobilized between the polyurethane resin particles, so that it is presumed that the effect is further enhanced.

In addition, by employing a polyol having a structure having a carbonate group or an ether group in the component as the polyol component of the polyurethane resin, compatibility with the coagulant is improved and blooming is suppressed. In addition, by using a polyvalent metal salt or an organic acid as a coagulant of the treatment liquid, compatibility is further improved, so that heat resistance is also excellent and blooming is further improved.

### <Ink bleeding and Ink adhesiveness>

The coagulant is taken into the hydrophilic polyurethane resin in the composite resin particles, so that when the ink lands on the base material to which the pretreatment liquid has been applied, the hydrophilic polyurethane resin swells by the ink solvent and efficiently releases the coagulant. It is presumed that a high-quality printed material is obtained in which the high print density portion of the ink does not bleed and the ink does not peel off.

### Brief Description of the Drawings

FIG. 1 is a schematic diagram of a printed material produced by using an inkjet pretreatment liquid and an inkjet recording ink of the present invention.
FIG. 2 is a schematic diagram illustrating an example of a pretreatment-inkjet recording apparatus preferable for the present invention.

### Embodiments to carry out the Invention

The inkjet recording pretreatment liquid of the present invention comprises at least water-insoluble resin particles, a coagulant, and water, wherein the water-insoluble resin particles contain a composite resin in which a polyolefin resin is contained in a polyurethane resin. This feature is a technical feature common to or corresponding to each of the following embodiments.

As an embodiment of the present invention, from the viewpoint of obtaining the effect of the present invention, it is preferable that the water-insoluble resin particles contain a composite resin in which a polyolefin resin is emulsified in a polyurethane resin. It is preferable from the viewpoint that the polyurethane resin having excellent compatibility with the coagulant is in contact with the coagulant, thereby stabilizing the coagulant and suppressing storage stability as a pretreatment liquid and suppressing blooming.

When the value of the mass ratio (U/O) of the polyurethane resin (U) and the polyolefin resin (O) of the composite resin particles is within the above range, stabilization of the polyolefin resin particles by the polyurethane resin particles becomes favorable, and hydrogen bonds are formed at the polyurethane resin sites between the composite particles, which is a preferable mode from the viewpoint of obtaining the effect of the present invention.

It is preferable to employ a polyol having a structure having a carbonate group or an ether group in the component as the polyol component of the polyurethane resin because the compatibility with the coagulant is improved and blooming is suppressed.

In addition, when the coagulant is a polyvalent metal salt or an organic acid, the compatibility between the polyurethane resin and the coagulant is improved.

The inkjet recording liquid set of the present invention is preferably a combination of a pretreatment liquid for inkjet recording according to the present invention and an inkjet recording ink containing at least a pigment, an organic solvent, and water, and the coagulant contained in the pretreatment liquid for inkjet recording is preferably the same as the aggregating agent for aggregating the pigment contained in the inkjet recording ink, from the viewpoint of suppressing blooming after ink landing, improving ink bleeding, and ink adhesiveness.

The method for manufacturing a pretreatment liquid for inkjet recording of the present invention is characterized in including at least a step of forming composite resin particles by emulsifying and dispersing the polyolefin resin and the polyurethane resin, and a step of mixing the composite resin particles and a coagulant.

The printed material of the present invention is characterized in that a printed layer formed using the inkjet recording ink is provided on a pretreatment layer formed using the pretreatment liquid for inkjet recording of the present invention on a non-absorptive film base material. By this printed material, generating of blooming is suppressed, and a printed material of high image quality without bleeding of ink may be obtained.

Therefore, the inkjet recording method of the present invention is a recording method in which the occurrence of blooming is suppressed by recording an image on a non-absorptive film base material using the pretreatment liquid for inkjet recording of the present invention or the inkjet recording liquid set, and a high-quality printed material without bleeding of ink is obtained.

Hereinafter, the present invention, its constituent elements, and modes and modes for carrying out the present invention will be described. In the present application, "to" is used in the meaning that numerical values described before and after are included as a lower limit value and an upper limit value.

### «Outline of Pretreatment liquid for inkjet recording of the present invention»

The pretreatment liquid for inkjet recording of the present invention (hereinafter, also simply referred to as a pretreatment liquid or a pretreatment ink) is an inkjet recording pretreatment liquid containing at least water-insoluble resin particles, a coagulant, and water, wherein the water-insoluble resin particles contain a composite resin in which a polyolefin resin is contained in a polyurethane resin. By such a configuration, it is possible to provide a pretreatment liquid for inkjet recording excellent in storage stability, blooming suppression property, ink bleeding prevention, and ink adhesiveness, a manufacturing method thereof, an inkjet recording liquid set, a printed material, and an inkjet recording method.

An aqueous emulsified dispersion in which a polyolefin resin is emulsified with a polyurethane resin having a hydrophilic group is disclosed in, for example, JP-A 2009-13226 and JP-A 2009-46568. However, in this technique, there is no description about adding the coagulant according to the present invention to the aqueous emulsified dispersion, and there is no description or suggestion that the coagulant is used for a pretreatment liquid for inkjet recording.

The pretreatment liquid for inkjet recording of the present invention is characterized in including a composite resin in which a polyolefin resin is contained in a polyurethane resin. This invention is based on a new finding as described in the following. By containing the composite resin particles having the polyurethane resin in the outermost layer, the compatibility between the coagulant and the polyurethane resin is improved, and deterioration of storage stability of pretreatment liquid due to low compatibility with coagulant which is a drawback of polyolefin resin and occurrence of blooming after coating may be suppressed.

That is, when the pretreatment liquid contains the composite resin particles in which the polyolefin resin is emulsified in the polyurethane resin as the water-insoluble resin particles, the contacting member with the coagulant in the pretreatment liquid is the polyurethane resin having high compatibility with the coagulant, so that the storage stability of the pretreatment liquid and the occurrence of blooming after application may be suppressed.

Further, since the coagulant is taken into the polyurethane resins having high compatibility with the coagulant, and when the ink lands on the base material to which the pretreatment liquid has been applied, the hydrophilic polyurethane resin swells by the ink solvent and efficiently releases the coagulant. In particular, bleeding of the high print density portion of the ink, and occurrence of peeling of the ink by poor adhesion of the ink are suppressed.

Here, the configuration of the printed material of the present invention will be described with reference to the drawings.

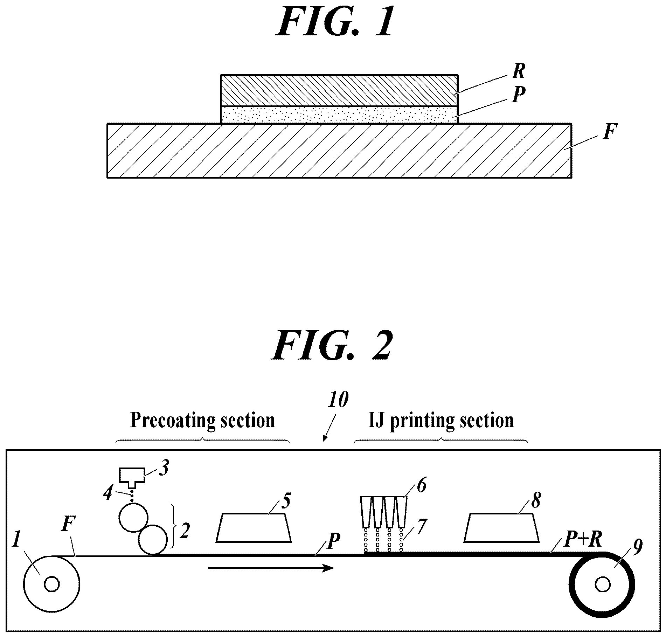

FIG. 1 is a schematic diagram of a printed material formed by an inkjet pretreatment liquid and an inkjet recording ink of the present invention.

A pretreatment layer P is formed on a base material F by discharging a pretreatment liquid for inkjet recording of the present invention from an inkjet head, and an inkjet recording ink is discharged from the inkjet head and fixed at a position where the pretreatment liquid layer P is fixed to form a printed layer R.

The above-mentioned configuration indicates the minimum configuration, and another functional layer may be formed between the base material F and the pretreatment liquid layer P, or a non-absorptive film base material F may be bonded to the upper layer of the printed layer R via a laminate adhesive layer, for example. At least, a configuration in which the pretreatment liquid layer P and the printed layer R both are in contact with each other is indispensable.

The "pretreatment liquid for inkjet recording" in the present invention is one type of ink to be applied to a base material in advance, which has a function of accelerating image formation of ink or improving image quality when an image is recorded on the base material by an inkjet printing method. Specifically, the pretreatment liquid for inkjet recording is an ink for fixing the ink at a position where the pretreatment liquid is applied to the recording medium so that the color ink forming the image does not bleed into the recording medium.

The base material is not particularly limited, and may be a paper base material having high water absorption, a base material having low water absorption such as coated paper for gravure or offset printing, or a non-water absorptive base material such as film, plastic board (soft vinyl chloride, hard vinyl chloride, acrylic plate, and polyolefin system), glass, tile, and rubber.

Among them, the base material having low water absorption and the base material having no water absorption are particularly preferably a film (referred to as a non-absorptive film base material in the present invention). By applying the pretreatment liquid for inkjet recording of the present invention to such a base material, the water-based ink may be sufficiently pinned to form a high-quality image with little bleeding.

Examples of such films include known plastic films. Specific examples of the plastic film described above are
a polyester film such as polyethylene terephthalate (PET), a polyethylene (PE) film including a high density polyethylene film and a low density polyethylene film, a polypropylene (PP) film, a polyamide films such as nylon (NY), a polystyrene film, an ethylene-vinyl acetate copolymer (EVA) film, a polyvinyl chloride (PVC) film, a polyvinyl alcohol (PVA) film, a polyacrylic acid (PAA) film, a polycarbonate film, a polyacrylonitrile film, and a biodegradable film such as a polylactic acid film. Moreover, in order to provide a gas barrier property, a moisture proof property, and an odor retention property, the film may be coated with polyvinylidene chloride on a single surface or on both surfaces of the film, and the film may be vapor-deposited with metal oxide. In addition, the film may be subjected to antifogging treatment. In addition, the film may be subjected to corona discharge and ozone treatment.

The film may be either an un-stretched film or a stretched film.

The film may also be a multi-layered base material in which a layer such as PVA coat is provided on the surface of an absorptive base material such as paper to make the area to be recorded non-absorptive.

In addition, the effect of the present invention becomes remarkable when recording is performed on a no water-absorbing film which has been subjected to anti-fogging processing, in which it is generally difficult to obtain the adhesiveness of the recording ink.

Generally, a film containing a surfactant is used as the film subjected to the anti-fogging process, and it is known that this surfactant adversely affects the adhesiveness of the recording ink. It is presumed that when the pretreatment liquid of the present invention is precoated on such a film, the surfactant is dissolved and diffused in the pretreatment liquid to suppress the surfactant from being oriented at a high concentration at the interface with the recording ink layer, and as a result, the adhesiveness is not hindered.

The effect of the present invention that transparency is hardly impaired when recording is performed on a recording medium having high transparency is remarkable.

The thickness of the film is preferably less than 250 µm.

Hereinafter, the components of the present invention will be described in detail.

### (1) Pretreatment liquid for inkjet recording

The pretreatment liquid for inkjet recording of the present invention is an inkjet recording pretreatment liquid containing at least water-insoluble resin particles, a coagulant, and water, wherein the water-insoluble resin particles contain a composite resin in which a polyolefin resin is contained in a polyurethane resin. According to the present invention, by containing the composite resin particles having the polyurethane resin in the outermost layer, it is possible to exhibit an excellent effect that the storage stability degradation of the pretreatment liquid and the occurrence of blooming after application is suppressed. Further, by adding a coagulant to the pretreatment liquid, the coagulant is incorporated into a hydrophilic polyurethane resin which is the outermost layer, so that when the ink lands on the base material to which the pretreatment liquid has been applied, the hydrophilic polyurethane resin swells by the ink solvent and efficiently releases the coagulant, and therefore, the effect of obtaining a high-quality printed material in which the high print density portion of the ink does not bleed and the ink does not peel off is particularly exhibited.

### (1.1) Water-insoluble resin particles

The water-insoluble resin particles according to the present invention contain a composite resin in which a polyolefin resin is contained in a polyurethane resin.

The state in which the olefinic resin is contained in the polyurethane resin may take various forms, but the olefinic resin may be dispersed as a plurality of particles in the polyurethane resin, or the olefinic resin may form a core-shell structure in which the core is formed and the polyurethane resin is used as a shell. The polyolefin resin may be contained so as to partially appear on the surface. In addition, other types of resins may be contained as long as they do not hinder the effect of the present invention.

Further, the water-insoluble resin particles according to the present invention are preferably contained in the range of 1 to 30 mass% based on the total mass of the pretreatment liquid, and more preferably contained in the range of 2 to 20 mass% from the viewpoint of improving storage stability as the pretreatment liquid and suppressing generation of blooming.

### (1.1.1) Polyolefin resin

Examples of the polyolefin resin may be modified polyolefins such as polyolefins modified with unsaturated carboxylic acids and/or acid anhydrides.

Examples of the polyolefin include polyethylene, polypropylene, ethylene-propylene copolymer, random copolymers or block copolymers of ethylene and/or propylene with other comonomers (a-olefin comonomers having 2 or more carbon atoms, preferably 2 to 6 carbon atoms such as 1-butene, 1-pentene, 1-hexene, 1-heptene, 1-octene, and 1-nonene) (e.g., ethylene-propylene-butene copolymers). Moreover, the substances obtained by copolymerization of two or more types of these other comonomers may be used. In addition, two or more of these polymers may be used by mixing.

As the modified polyolefin, a polyolefin modified with an unsaturated carboxylic acid and/or an acid anhydride and/or a compound having one or more double bonds per molecule is preferably used.

Examples of the unsaturated carboxylic acid and the acid anhydride include α, β-unsaturated carboxylic acids and their anhydrides. Specific examples thereof are maleic acid, maleic anhydride, fumaric acid, citraconic acid, citraconic anhydride, mesaconic acid, itaconic acid, itaconic anhydride, aconitic acid, and aconitic acid anhydride. These may be used alone or in combination of two or more. When two or more are used in combination, the physical properties of the coating often become good.

As the compound having one or more double bonds per one molecule, a (meth)acrylic acid monomer may be cited. Examples of the (meth)acrylic acid monomer are methyl (meth)acrylate, ethyl (meth)acrylate, propyl (meth)acrylate, butyl (meth)acrylate, 2-hydroxyethyl (meth)acrylate, 2-hydroxypropyl (meth)acrylate, 4-hydroxybutyl (meth)acrylate, cyclohexyl (meth)acrylate, tetrahydrofurfuryl (meth)acrylate, isobornyl (meth)acrylate, benzyl (meth)acrylate, 2-hydroxybutyl (meth)acrylate, benzyl (meth)acrylate, glycidyl (meth)acrylate, (meth)acrylic acid, (di)ethylene glycol di(meth)acrylate, di (meth) acrylic acid 1,4-butanediol di(meth)acrylate, 1,6-hexanediol di(meth)acrylate, trimethylolpropane tri(meth)acrylate, glycerol di(meth)acrylate, 2-ethylhexyl (meth)acrylate, lauryl (meth)acrylate, stearyl (meth)acrylate, and stearyl acrylamide. A styrene monomer may be also cited. Examples of the styrene monomer are: styrene, α-methylstyrene, paramethylstyrene, and chloromethylstyrene. Other usable monomers include vinyl monomers such as divinyl benzene, vinyl acetate, and vinyl esters of versatic acid. Here, (meth)acrylic acid indicates acrylic acid and methacrylic acid.

Modification of the polyolefin is carried out by dissolving the polyolefin once in an organic solvent such as toluene or xylene, and in the presence of a radical generator, by reacting α,β-unsaturated carboxylic acid and/or its acid anhydride and/or a compound having one or more double bonds per molecule. Alternatively, in an autoclave which may be reacted in a molten state capable of raising the temperature to the softening temperature or melting point of the polyolefin or higher, or in a uniaxial or biaxial multiaxial extruder, in the presence or absence of a radical generator, modification may be carried out by reacting α,β-unsaturated carboxylic acid and/or its acid anhydride and/or a compound having one or more double bonds per molecule.

Examples of the radical generator used for the modification are peroxides such as di-tert-butyl perphthalate, tert-butyl hydroperoxide, dicumyl peroxide, benzoyl peroxide, tert-butyl peroxybenzoate, tert-butyl peroxyethyl hexanoate, tert-butyl peroxypivalate, methyl ethyl ketone peroxide, and di-tert-butyl peroxide; and azonitrile compounds such as azobisisobutyronitrile and azobisisopropionitrile. When graft copolymerization is carried out using these peroxides, the amount of peroxide is preferably in the range of 0.1 to 50 parts by mass, particularly preferably in the range of 0.5 to 30 parts by mass with respect to 100 parts by mass of the polyolefin.

The above-mentioned polyolefin resin as an emulsification raw material may be manufactured by a publicly known method, and there is no limitation in particular about each manufacturing method or modification degree.

The polyolefin resin used in the present invention preferably has a weight average molecular weight in the range of 20,000 to 100,000. When it is 20,000 or more, the cohesion of the coating film becomes strong, and the coating film physical properties such as adhesion and solvent resistance (gasohol resistance) are improved. When it is 100,000 or less, the solubility with respect to the organic solvent is good, and particle size reduction of the emulsified dispersion is promoted. The weight average molecular weight is a value measured by gel permeation chromatography (GPC). For example, by using "RID-6A" manufactured by Shimadzu Corporation (column: Tosoh Corporation "TSK-GEL", solvent: tetrahydrofuran (THF) and column temperature: 40 °C), it may be determined from a calibration curve prepared with polystyrene standard samples.

In the present invention, commercially available polyolefin resins may also be used. As resin particles made of resin having polyolefin structure, the following may be used: "AUROREN 150A" (polyolefin resin particles), "SUPERCHLON E-415" (polypropylene resin particles), and "AUROREN AE-301" (polyolefin resin particles) (made by Nippon Paper Industries Co., Ltd.); and "HARDLEN Na-1001" (made by Toyo Kasei Co., Ltd.).

### (1.1.2) Polyurethane resin

As a polyurethane resin, a substance having a hydrophilic group is used. By introducing a hydrophilic group, the function as an emulsifier for a polyolefin resin may be imparted to the polyurethane resin, and composite resin particles that are an emulsified dispersion of the polyolefin resin may be obtained.

As such a hydrophilic group, a carboxy group (-COOH) and a salt thereof, and a sulfonic acid group (-SO₃H) and a salt thereof may be mentioned. Examples of the salt include alkali metal salts such as sodium salt and potassium salt, and amine salts. Among these, as a hydrophilic group, a carboxy group or a salt thereof is preferable.

The polyurethane resin that may be used for the composite resin particles of the present invention is preferably an aqueous dispersion in which a self-emulsifying polyurethane having a water-soluble functional group is dispersed in the molecule, or an aqueous dispersion of forced emulsification type polyurethane prepared by emulsifying with a strong mechanical shear force using a surfactant. The polyurethane resin in the aqueous dispersion is obtained by the reaction of a polyol with an organic polyisocyanate and a hydrophilic group-containing compound.

Examples of a polyol which may be used for preparation of polyurethane resin aqueous dispersion are polyester polyol, polyether polyol, polycarbonate polyol, and polyolefin type polyol. Among them, it is preferable to use a polyether polyol or a polycarbonate polyol to form a structure having a carbonate group or an ether group in a urethane resin from the viewpoint of exhibiting excellent compatibility with the coagulant described below.

Polyester polyols include condensation products made of low molecular weight polyols and polycarboxylic acids. Examples of the low molecular weight polyol are ethylene glycol, diethylene glycol, triethylene glycol, 1,2--propylene glycol, 1,3-propylene glycol, neopentyl glycol, 1,3-butanediol, 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexane dimethanol. Examples of the polycarboxylic acid are succinic acid, glutaric acid, adipic acid, sebacic acid, phthalic acid, isophthalic acid, terephthalic acid, trimellitic acid, tetrahydrofuranic acid, endomethine tetrahydrofuranic acid, and hexahydrophthalic acid.

As polyether polyols, various polyether polyols may be mentioned. Examples of the polyether polyol are polyethylene glycol, polypropylene glycol, polyethylene polytetramethylene glycol, polypropylene polytetremethylene glycol, and polytetramethylene glycol.

The polycarbonate polyol may be obtained, for example, by the reaction of a carbonic acid derivative such as diphenyl carbonate, dimethyl carbonate or phosgene with a diol. Examples of the diol are ethylene glycol, diethylene glycol, triethylene glycol, 1,2--propylene glycol, 1,3-propylene glycol, neopentyl glycol, 1,3-butanediol, 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexane dimethanol. Among these, polycarbonate polyols using 1,6-hexanediol are preferable from the viewpoint of weatherability and solvent resistance.

As the organic polyisocyanate, those known in the field of urethane industry may be used. Examples thereof are aromatic isocyanates such as tolylene diisocyanate (TDI), diphenylmethane diisocyanate (MDI), polymeric (MDI), xylylene diisocyanate (XDI), and tetramethyl xylylene diisocyanate (TMXDI); aliphatic isocyanate such as hexamethylene diisocyanate (HMDI); alicyclic isocyanates such as isophorone diisocyanate (IPDI), and 4,4'-dicyclohexylmethane diisocyanate (hydrogenated MDI, H12 MDI). Among these, it is preferable to use aliphatic isocyanate and/or alicyclic isocyanate. When non-yellowing is required, it is preferable to use HMDI for aliphatic isocyanates, IPDI and H12MDI for alicyclic isocyanates, and XDI and TMXDI for aromatic isocyanates.

As a hydrophilic group containing compound, the compound which has one or more active hydrogen atoms and the said hydrophilic group in a molecule is mentioned. Examples thereof are: compounds containing a carboxylic group such as 2,2-dimethylol propionic acid, 2,2-dimethylol butanoic acid, 2,2-dimethylol butyric acid, 2,2-dimethylol valeric acid, and glycine, and their derivatives of sodium salts, potassium salts, and amine salts; compounds containing a sulfonic acid group such as taurine (i. e., aminoethyl sulfonic acid), and ethoxypolyethylene glycol sulfonic acid, and their derivatives of sodium salts, potassium salts, and amine salts.

The polyurethane resin according to the present invention may be produced as follows. Firstly, a urethane prepolymer is obtained by mixing a polyol, an organic polyisocyanate and a hydrophilic group-containing compound and reacting them at 30 to 130 °C for 30 minutes to 50 hours by a known method.

The obtained urethane prepolymer is extended and polymerized by a chain extender to obtain a polyurethane resin having a hydrophilic group. As a chain extender, water and/or an amine compound is preferably used. By using water or an amine as a chain extender, the isocyanate-terminated prepolymer may be efficiently elongated by reacting with a free isocyanate in a short time.

The amines as a chain extender include polyamines. Examples of polyamines are: aliphatic polyamines such as ethylenediamine and triethylenediamine; aromatic polyamines such as meta xylene diamine and toluylene diamine; hydrazine; and polyhydrazino compound such as adipic acid dihydrazide. The amine may contain, together with the above-mentioned polyamine, a monovalent amine such as dibutylamine or methyl ethyl ketoxime as a reaction terminator to such an extent that polymerization is not significantly inhibited.

In the synthesis of the urethane prepolymer, a solvent which is inert to isocyanate and which can dissolve the urethane prepolymer may be used. Examples of the solvent include dioxane, methyl ethyl ketone, dimethylformamide, tetrahydrofuran, N-methyl-2-pyrrolidone, toluene, and propylene glycol monomethyl ether acetate. It is preferable that these hydrophilic organic solvents used in the reaction step are finally removed.

In addition, in the synthesis of the urethane prepolymer, a catalyst may be added to accelerate the reaction. Examples thereof are amine catalysts (e.g., triethylamine, N-ethylmorpholine, and triethyldiamine), tin-based catalysts (e.g., dibutyltin dilaurate and dioctyltin dilaurate), and titanium-based catalysts (e.g., tetrabutyl titanate).

The molecular weight of the polyurethane resin is preferably as large as possible by introducing a branched structure or an internal cross-linking structure. The molecular weight is preferably in the range of 50,000 to 10,000,000. When the molecular weight is increased to be insoluble in the solvent, a coating film having excellent weather resistance and water resistance may be obtained.

In the present invention, a commercially available polyurethane resin can also be used, and for example, cationic or nonionic polyurethane resin particles may be preferably used.

Specific examples of the cationic or nonionic polyurethane resin particles are given below. Examples of the cationic polyurethane resin particles include "Superflex 620" and "Superflex 650" ("Superflex" is a registered trademark of Dai-ichi Kogyo Seiyaku Co., Ltd.) and "Permarine UC-20" ("Permarine" is a registered trademark of Sanyo Chemical Industries, Ltd.), and "Parasurf UP-22" made by Ohara Palladium Chemical Co., Ltd.
Examples of the nonionic polyurethane resin particles include "Superflex 500M" and "Superflex E-200" made by Dai-ichi Kogyo Seiyaku Co., Ltd.

### (1.1.3) composite resin particles

The water-insoluble resin particles according to the present invention contain a composite resin in which the polyolefin resin is contained in the polyurethane resin. Further, it is preferable to contain a composite resin in which a polyolefin resin is emulsified in a polyurethane resin.

That is, in the water-insoluble resin particles containing the composite resin, the polyurethane resin exists at the interface between the polyolefin resin as the water-insoluble resin and water as the continuous phase, and functions as a water-insoluble resin layer different from the resin for protecting the water-insoluble resin. By forming the composite resin particles obtained by emulsifying the polyolefin resin with the polyurethane resin in this manner, it is possible to suppress the decrease of the compatibility with the polyurethane resin and the aggregating agent in the case of the polyolefin resin alone. In addition, it is possible to improve the coating film physical properties and improve the stability of the pretreatment liquid according to the present invention as compared with the case where the polyolefin resin and the polyurethane resin are emulsified and mixed simply.

The composite resin particles may be obtained by the manufacturing method (I) described later, or may be obtained by the manufacturing method (II).

The value of the mass ratio (U/O) of the polyurethane resin (U) and the polyolefin resin (O) in the composite resin is preferably in the range of 40/60 to 95/5. When the presence ratio of the polyurethane resin is within the above range, the compatibility with the dispersant tends to be improved, and the solvent resistance is also excellent. Further, when the presence ratio of the polyolefin resin is in the above range, the adhesion to the polyolefin film absorptive film base material is excellent. In addition, since the olefinic resin has a non-polar site, the storage stability is also excellent when the presence ratio of the olefinic resin is within the upper range. A more preferable range of the presence ratio is (U/O) = 40/60 to 80/20.

The total resin concentration of the polyolefin resin and the polyurethane resin in the composite resin particles is not particularly limited, but is usually 5 mass% or more, preferably in the range of 10 to 70 mass%.

In emulsification, a surfactant may be used as an emulsifier together with the polyurethane resin. That is, the composite resin particles according to the present invention may further contain a surfactant as an emulsifier. The addition of the surfactant may further improve the storage stability of the composite resin particles.

As such a surfactant, it is preferable to use either or both of an anionic surfactant and a nonionic surfactant. It is preferable to blend these anionic surfactant and nonionic surfactant in the range of 1 to 20 parts by mass in total of both active agents with respect to 100 parts by mass of the total resin mass. When the amount is 20 parts by mass or less, water resistance and solvent resistance tend to be excellent.

The value of the blending mass ratio (X/Y) of the anionic surfactant (X) to the nonionic surfactant (Y) is preferably in the range of 100/0 to 50/50. By making the blending quantity of an anionic surfactant in this range, emulsifying ability and storage stability may be further improved.

Examples of the anionic surfactant include alkyl sulfate, polyoxyethylene alkyl ether sulfate, sulfosuccinate, alpha olefin sulfonate, N-acyl amino acid salt, carboxylate, and phosphoric acid ester. Among these, sulfosuccinate and alpha olefin sulfonate are favorable. The type of salt is not particularly limited, but metal salts such as a sodium salt, a potassium salt, a magnesium salt, and a triethanolamine salt are preferable.

Examples of the nonionic surfactant include polyoxyethylene alkyl ethers, polyoxyethylene alkylphenyl ethers, polyoxyethylene alkylamine ethers, polyoxyethylene fatty acid esters, sorbitan fatty acid esters, and sucrose fatty acid esters. Among these, polyoxyethylenealkyl ethers and polyoxyethylenealkylphenyl ethers are preferable.

In the composite resin particles according to the present invention, an antioxidant, a light-resistant agent, a plasticizer, a foaming agent, a thickener, a colorant, a flame retardant, other aqueous resin and various fillers may be added in an amount of not inhibiting the effect of the present invention. Antioxidants include, for example, solutions or emulsions of antioxidants such as hindered phenols or semicarbazides. Examples of the light-resistant agent include solutions or emulsions of light-resistant agents such as hindered amines (HALS), benzophenones, and benzotriazoles.

In addition, various crosslinking agents such as epoxy, carbodiimide, oxazolidine, blocked isocyanate, and isocyanate may be added to the composite resin particles according to the present invention in order to impart higher durability.

The method for producing the composite resin particles according to the present invention will be described.

The composite resin particles described above may be prepared by the following preparation method (I) or (II).
(I) A method in which a polyolefin resin is emulsified in water with a urethane prepolymer having a hydrophilic group, and then an amine as a chain extender or an aqueous solution thereof is added to chain-extend the urethane prepolymer (to obtain a high molecular weight compound).
(II) A method in which a urethane prepolymer having a hydrophilic group is emulsified in water, and further, an amine as a chain extender or an aqueous solution thereof is added to chain-extend the urethane prepolymer to prepare an aqueous dispersion of a polyurethane resin, and then a polyolefin resin is emulsified in the aqueous dispersion of polyurethane resin.

An embodiments according to the above preparation method of (I) will be described. In this method, first, a resin solution obtained by dissolving a polyolefin resin in a solvent and a solution of a urethane prepolymer having a hydrophilic group are mixed, and water is added to the mixture and stirred to emulsify the mixture.

Examples of the solvent include organic solvents such as hexane, isohexane, pentane, cyclohexane, methylcyclohexane, heptane, isooctane, methyl ethyl ketone, xylene, toluene and benzene, and solvents other than water such as carbon dioxide in a supercritical state. These may be used alone or in combination of two or more.

The emulsification method may be any method such as known forced emulsification method, phase inversion emulsification method, D-phase emulsification method, and gel emulsification method. The equipment used may be, for example, single stirring with a stirring blade, a disper, and a homogenizer. It is also possible to use combined stirring combining these, a sand mill, or a multi-screw extruder. In addition, the above-mentioned surfactant may be mixed together with the urethane prepolymer during the emulsification.

Then, after diluting the above-mentioned emulsion with water, an amine as a chain extender is added, and the remaining isocyanate group of the urethane prepolymer is crosslinked by the chain extender, and the polyurethane resin is polymerized. Thereafter, by distilling off the organic solvent, a composite resin particle dispersion (that is, a dispersion in which water-insoluble resin particles are dispersed) containing a polyolefin resin inside the polyurethane resin is obtained.

In the composite resin particle dispersion thus obtained, when the polyolefin resin is a modified polyolefin, the acid component introduced into the polymer may be neutralized by adding a basic substance. By ionizing the same portion by neutralization, the composite resin particle dispersion may further increase the stability because the polymer molecules are elongated and the entire system causes a viscosity increase. In this case, the desired pH may be adjusted by the addition amount of the basic substance.

The basic substance to be used is not particularly limited as long as it can neutralize the acid moiety in the polyolefin resin. Examples thereof are organic basic substances such as methylamine, ethylamine, propylamine, butylamine, hexylamine, octylamine, ethanolamine, propanolamine, dimethylamine, diethylamine, dipropylamine, dipropylamine, dibutylamine, dihexylamine, dioctylamine, diethanolamine, dipropanolamine, N-methyldiethanolamine, triethylamine, N,N-dimethylethanolamine, 2-dimethylamino-2-methyl-1-propanol, 2-amine-2-methyl-1-propanol, and morpholine; and inorganic basic substance such as an aqueous ammonia solution, sodium hydroxide, potassium hydroxide, sodium carbonate, sodium hydrogencarbonate, ammonium carbonate, and potassium carbonate. When these basic substances are used, the purpose of the present invention may often be achieved more effectively by using two or more types of basic substances in combination. In addition, when an amine is used as a basic substance, a tertiary amine is used so that it may not react with free isocyanate as what is added before making a urethane prepolymer chain-extend. On the other hand, when neutralizing modified polyolefin after chain extension, any of primary, secondary and tertiary amines may be used.

The amount of the basic substance used for neutralization varies depending on the degree of modification of the modified polyolefin, and it is preferably in the range of 0.1 to 10 parts by mass with respect to 100 parts by mass of the modified polyolefin. When the amount of the basic substance is 0.1 parts by mass or more, the pH becomes neutral, and as a result, the storage stability of the composite resin particle dispersion is improved. On the other hand, when the amount of the basic substance is 10 parts by mass or less, the storage stability of the composite resin particle dispersion is good, the basicity is not strong, and a large amount of hydrophilic substance is not introduced into the coating film. Thereby, water resistance of the coating film is improved.

Next, an embodiment according to the preparation method (II) will be described. In this method, first, water is added to a solution of a urethane prepolymer having a hydrophilic group to emulsify. Then, an amine as a chain extender is added to the obtained emulsion, and the remaining isocyanate group of the urethane prepolymer is cross-linked with the chain extender to prepare an aqueous dispersion of a polymerized polyurethane resin.

Thereafter, a resin solution obtained by dissolving a polyolefin resin in a solvent and the aqueous dispersion of the polyurethane resin having a hydrophilic group obtained above are mixed. Thereby, the polyolefin resin is emulsified in the polyurethane resin having the hydrophilic group. Then, after diluting with water, the organic solvent is distilled off to obtain a composite resin particle dispersion (that is, a dispersion in which water-insoluble resin particles are dispersed) containing a polyolefin resin in the inside of the polyurethane resin.

The solvent and emulsify method in the method (II) are the same as in the method (I). In the method (II), when emulsifying the polyolefin resin, a surfactant may be mixed with the polyurethane resin. Further, in the obtained composite resin particle dispersion, the modified polyolefin may be neutralized by a basic substance in the same manner as in the above method (I).

The average particle diameter of the composite resin particles is not particularly limited, but it is preferably in the range of 10 to 500 nm, more preferably in the range of 10 to 300 nm, and still more preferably in the range of 10 to 200 nm. The average particle size may be measured by a commercially available particle size measuring instrument using a dynamic light scattering method or an electrophoresis method. The measurement by the dynamic light scattering method is simple, and the particle diameter range may be measured accurately.

### (1.2) Coagulant

The pretreatment liquid for inkjet recording of the present invention preferably contains a material that generates aggregation when in contact with the inkjet recording ink, that is, a coagulant. Thereby, the interaction with the inkjet recording ink is increased, and the dots of the water-soluble ink may be further fixed.

The coagulant preferably contains any of a cationic resin, a metal chelating agent, a polyvalent metal salt, and an organic acid, and more preferably contains any of the polyvalent metal salt and the organic acid.

The cationic resin and the polyvalent metal salt can aggregate an anionic component (usually, a coloring material or a pigment) in the inkjet recording ink by salting out. The organic acid can aggregate anionic components in the inkjet recording ink by pH fluctuation.

Examples of the cationic resin include polyallylamine, polyvinylamine, polyethyleneimine and polydiallyldimethyl ammonium chloride.

Examples of the metal chelating agent include metal chelate compounds in which a metal such as aluminum, zinc, cadmium, nickel, cobalt, copper, calcium, barium, titanium, manganese, iron, lead, zirconium, chromium, or tin is coordinated with acetylacetone having a nitrogen containing group, methyl acetoacetate, ethyl acetoacetate, ethyl lactate, or methyl salicylate.

Examples of the polyvalent metal salt include water soluble salts such as a calcium salt, a magnesium salt, an aluminum salt and a zinc salt.

The organic acid contained in the pretreatment liquid is capable of aggregating a pigment which may be contained in the inkjet recording ink, and the first dissociation constant is preferably 3.5 or less, more preferably in the range of 1.5 to 3.5. Within this range, the liquid deviation in the low density portion where the printing rate is low is further prevented, and the beading in the high density portion where the printing rate is high is further improved.

It is preferable to use an organic acid which is not completely neutralized by a base. Neutralization with a base means that the acid group of these acids and another positively charged element or compound (for example, an inorganic compound such as a metal) are ionically bonded. Moreover, "not completely neutralized" means that the acidic group which has not formed the said ionic bond exists among the acidic groups possessed by the organic acid. By using an organic acid having an acidic group which does not form an ionic bond, the compatibility with the composite resin particles having a polyurethane structure contained in the pretreatment liquid is high, and a transparent pretreatment layer may be formed. Thereby, it is assumed d that the color tone of the formed image is brighter than in the case of using a polyvalent metal salt. In addition, the storage stability of the pretreatment liquid may be easily maintained by using an organic acid, and blocking does not easily occur after the pretreatment liquid is applied and dried. Preferred organic acids from the above viewpoints are: formic acid, acetic acid, propionic acid, isobutyric acid, oxalic acid, fumaric acid, malic acid, citric acid, malonic acid, succinic acid, maleic acid, benzoic acid, 2-pyrrolidone-5-carboxylic acid, lactic acid, acrylic acid and derivatives thereof, methacrylic acid and derivatives thereof, and compounds having a carboxy group including acrylamide and derivatives thereof, sulfonic acid derivatives, phosphoric acid and derivatives thereof.

The content of the organic acid in the pretreatment liquid may be such that the pH of the pretreatment liquid is adjusted to less than the first dissociation constant of the organic acid. By containing the organic acid in an amount such that the pH of the pretreatment liquid is less than the first dissociation constant of the organic acid in the pretreatment liquid, bleeding during high speed printing may be effectively suppressed.

The composite resin particles having a polyurethane structure contained in the pretreatment liquid of the present invention can achieve both the bleeding suppression and the adhesion of the inkjet recorded image. The reason for this is not clear, but it is inferred as follows.

In the present invention, it is considered that by printing an inkjet recording ink on a pretreatment liquid layer formed by a pretreatment liquid, the organic acid is dissolved and diffused from the pretreatment liquid layer to the recording ink, and the pigment is aggregated and fixed, thereby suppressing bleeding and poor adhesion. Therefore, it is preferable to increase the dissolution-diffusion rate of the organic acid into the inkjet recording ink as the printing speed is particularly high. In order to increase the dissolution-diffusion rate of the organic acid, the resin of the pretreatment liquid layer is preferably swollen or dissolved by the recording ink. On the other hand, it is presumed that if the swelling ability or solubility is too high, a uniform film cannot be formed and adhesion cannot be obtained. The composite resin particles having a polyurethane structure are considered to be capable of ensuring adhesiveness because the polyol component contained in the structure swells moderately by the organic solvent contained in the recording ink to promote diffusion of the organic acid, and the uniform film state may be maintained by the hard segment of the isocyanate component. It is particularly preferable that the polyol component has a polycarbonate structure or a polyether structure in terms of storage stability of the pretreatment liquid.

The coagulant is preferably present in the range of 0.1 to 20 mass% in the above-mentioned pretreatment liquid in that the anionic component in the inkjet recording ink may be effectively aggregated.

The content of the coagulant in an aqueous solution may be measured by a known method. For example, when the coagulant is a polyvalent metal salt, the content may be measured by ICP emission analysis, and when the coagulant is an acid, the content may be measured by high performance liquid chromatography (HPLC).

In the case of using an organic acid, the added amount of the organic acid is preferably an amount to adjust the pH of the pretreatment liquid below neutralization equivalent of anionic component contained in the inkjet recording ink. When the anion component is a compound having a carboxy group, the first dissociation constant of the organic acid is preferably 3.5 or less from the viewpoint of making it difficult to cause bleeding of the image.

The application amount of the pretreatment liquid of the present invention is not particularly limited, and may be appropriately adjusted. For example, when the coagulant is a polyvalent metal salt, it is preferable to set the amount of polyvalent metal salt within the range of 0.1 to 20 g/m². When the coagulant is an organic acid, the amount of the organic acid applied is preferably equal to or less than the neutralization equivalent of the anion component in the water-soluble ink.

### (1.3) Water and other additives

The water contained in the pretreatment liquid for inkjet recording of the present invention is not particularly limited, and may be ion-exchanged water, distilled water, or pure water.

As a solvent of the pretreatment liquid for inkjet recording of the present invention, an organic solvent may be contained in addition to water. The solvent may be removed at the time of drying of the pretreatment liquid in the last part.

Further, the pretreatment liquid may contain a surfactant. As a result, adaptability to various application methods may be enhanced.

In the pretreatment liquid, other components such as a cross-linking agent, an antifungal agent, and a germicide may be appropriately blended, as long as the effects of the present invention are not impaired.

### (2) Inkjet recording liquid set

Hereinafter, the inkjet recording liquid set and the inkjet recording method of the present invention will be described in detail.

The inkjet recording liquid set of the present invention is an inkjet recording liquid set combining a pretreatment liquid for inkjet recording and an inkjet recording ink containing at least a pigment, an organic solvent, and water, wherein the pretreatment liquid for inkjet recording is a pretreatment liquid for inkjet recording of the present invention, and the aggregating agent contained in the inkjet recording pretreatment liquid is an aggregating agent for aggregating a pigment contained in the inkjet recording ink. The same aggregation agent as the aggregating agent for coagulating the pigment contained in the inkjet recording ink is preferable from the viewpoint of suppressing blooming after ink landing, improving ink bleeding and ink adhesiveness without a problem of compatibility between aggregating agents.

That is, in order to obtain the printed material of the present invention, when printing on the surface of one type of non-absorptive base material selected from the group consisting of polyolefin plastic, polyethylene terephthalate plastic, mirror-coated paper, and cast-coated paper using the ink set of the present invention consisting of the pretreatment liquid and recording ink, it is possible to apply the pretreatment liquid by a printing method such as a wet coating method or preferably an inkjet printing method to at least a region of the base material surface to be printed, and then print the recording ink on the region by an inkjet printing method.

According to the method using this ink set, for example, by using one inkjet printer, the application of the pretreatment liquid constituting the ink set of the present invention to the surface of the non-absorptive base material such as the polyolefin plastic, and the printing by the ink may be performed successively and efficiently. Then, as described above, it is possible to print characters and patterns having better fixing properties on the surface of the non-absorptive medium.

For example, when characters and patterns are printed in full-color, an ink set composed of 4 colors of cyan (C), magenta (M), yellow (Y), and black (K), or 6 colors of adding light cyan (LC) and light magenta (LM), and a pretreatment liquid is loaded in the ink supply unit (ink cartridges) of one inkjet printer.

Then, first, from the supply unit loaded with the pretreatment liquid, the pretreatment liquid is applied on the surface of the non-absorptive base material such as the polyolefin plastic through the nozzle of the head in the region which will be printed with arbitrary characters and patterns using an ink or in the entire surface of the base material to form a pretreatment layer.

Next, after drying the pretreatment layer as necessary, the ink of each color is applied to the surface from the respective supply parts through the nozzles of the head. Corresponding to the formed image, the ink is discharged sequentially and intermittently, as in the case of the ordinary inkjet printing method. Thus, it is possible to print arbitrary characters and patterns on the surface of the non-absorptive base material.

By using the pretreatment liquid of the present invention, it is possible to prevent bleeding from occurring even when printing is performed directly using the ink without a drying step after applying the pre-treatment liquid, thereby shortening the total printing time and reducing the energy required for printing.

When the ink set of the present invention is used, it is also possible to apply the pretreatment liquid to the surface of a non-absorptive base material such as polyolefin plastic by any other application method than the inkjet printing method, such as a roller coating method or a spray coating method, for example, to form a pretreatment liquid layer, and then to print the ink by the inkjet printing method, instead of the above-mentioned printing method.

As the pigment contained in the recording ink, an anionic dispersed pigment, for example, an anionic self-dispersible pigment or a pigment dispersed by an anionic polymer dispersant may be used. In particular, a pigment dispersed by an anionic polymeric dispersant is suitable.

As the pigment, conventionally known pigments may be used without particular limitation, and, for example, organic pigments such as insoluble pigments and lake pigments, and inorganic pigments such as titanium oxide may be preferably used.

The insoluble pigment is not limited. Preferable examples of the insoluble pigment are azo, azomethine, methine, diphenylmethane, triphenylmethane, quinacridone, anthraquinone, perylene, indigo, quinophthalone, isoindolinone, isoindoline, azine, oxazine, thiazine, Dioxazine, thiazole, phthalocyanine, and diketopyrrolopyrrole pigments.

Specific organic pigments that may be preferably used include the following pigments.

Examples of a magenta or red pigment are C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48: 1, C. I. Pigment Red 53: 1, C. I. Pigment Red 57: 1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, C. I. Pigment Red 202, C. I. Pigment Red 222, and C. I. Pigment Violet 19.

Examples of an orange or yellow pigment are C. I. Pigment Orange 31, C. I. Pigment Orange 43, C. I. Pigment Yellow 12, C. I. Pigment Yellow 13, C. I. Pigment yellow 14, C. I. Pigment Yellow 15, C. I. Pigment Yellow 15: 3, C. I. Pigment Yellow 17, C. I. Pigment Yellow 74, C. I. Pigment Yellow 93, C. I. Pigment Yellow 128, C. I. Pigment Yellow 94, C. I. Pigment Yellow 138, and C. I. Pigment Yellow 155. In particular, in view of the balance of color tone and light resistance, C. I. Pigment Yellow 155 is preferred.

Examples of a green or cyan pigment are C. I. Pigment Blue 15, C. I. Pigment Blue 15: 2, C. I. Pigment Blue 15:3, C. I. Pigment Blue 16, C. I. Pigment Blue 60, and C. I. Pigment Green 7.

Examples of a black pigment are C. I. Pigment Black 1, C. I. Pigment Black 6, and C. I. Pigment Black 7.

The pigment dispersant used to disperse the pigment is not particularly limited, and a polymer dispersant having an anionic group, and those having a molecular weight in the range of 5,000 to 200,000 may be suitably used.

Examples of the polymer dispersant are styrene, styrene derivatives, vinyl naphthalene derivatives, acrylic acid, acrylic acid derivatives, maleic acid, maleic acid derivatives, itaconic acid, itaconic acid derivatives, fumaric acid, block copolymers having a structure derived from two or more monomers selected from fumaric acid derivatives, random copolymers and salts thereof, polyoxyalkylenes, and polyoxyalkylene alkyl ethers.

The polymer dispersant preferably has an acryloyl group, and is preferably neutralized with a neutralizing base and added. The neutralizing base is not particularly limited, and it is preferably an organic base such as ammonia, monoethanolamine, diethanolamine, triethanolamine or morpholine. In particular, when the pigment is titanium oxide, the titanium oxide is preferably dispersed by a polymer dispersant having an acryloyl group.

The addition amount of the polymer dispersant is preferably in the range of 10 to 100 mass%, and more preferably in the range of 10 to 40 mass% with respect to the pigment.

It is particularly preferred that the pigment is in the form of a so-called capsule pigment, in which the pigment is coated with the above-mentioned polymeric dispersant. Various known methods may be used to coat the pigment with the polymer dispersant. For example, a phase inversion emulsification method, an acid precipitation method, or a method of dispersing a pigment with a polymerizable surfactant is performed, then, supplying a monomer thereto, and coating while polymerizing may be preferably exemplified.

Particularly preferable method is as follows: a water-insoluble resin is dissolved in an organic solvent such as methyl ethyl ketone, and the acid group in the resin is partially or completely neutralized with a base; then, a pigment and ion-exchange water is added and the mixture is dispersed; thereafter, the organic solvent is removed and water is added according to necessity.

The average particle diameter of the pigment in the recording ink in the dispersed state is preferably in the range of 50 to 200 nm. Thereby, the dispersion stability of the pigment may be improved, and the storage stability of the ink may be improved. The particle size of the pigment may be measured by a commercially available particle size measuring instrument using a dynamic light scattering method or an electrophoresis method. The measurement by the dynamic light scattering method is simple, and the particle diameter range may be measured accurately.

The pigment may be used after being dispersed with a disperser together with a dispersant and other necessary additives depending on the desired purposes.

As a dispersing machine, a ball mill, a sand mill, a line mill, and a high pressure homogenizer, which are conventionally known, may be used. Among them, dispersing the pigment by a sand mill is preferable because the particle size distribution becomes sharp The material of the beads used for sand mill dispersion is not particularly limited, and it is preferably zirconia or zircon from the viewpoint of preventing formation of bead fragments and contamination of ionic components. Furthermore, the bead diameter is preferably in the range of 0.3 to 3 mm

The content of the pigment in the recording ink is not particularly limited, and a range of 7 to 18 mass% is preferable for titanium oxide, and a range of 0.5 to 7 mass% is preferable for an organic pigment.

As the organic solvent contained in the recording ink, a water-soluble organic solvent may be suitably used. Examples of the water-soluble organic solvent include alcohols, polyhydric alcohols, amines, amides, glycol ethers, and 1,2-alkanediols having 4 or more carbon atoms.

Examples of the alcohol include methanol, ethanol, propanol, isopropanol, butanol, isobutanol, secondary butanol, and tertiary butanol.

Examples of the polyhydric alcohols include ethylene glycol, diethylene glycol, triethylene glycol, tetraethylene glycol, polyethylene glycol having 5 or more ethylene oxide groups, propylene glycol, dipropylene glycol, tripropylene glycol, polypropylene glycol having 4 or more propylene oxide groups, butylene glycol, hexanediol, pentanediol, glycerine, hexanthriol, and thiodiglycol.

Examples of the amine include ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine.

Examples of the amides include formamide, N,N-dimethylformamide, and N,N-dimethylacetamide.

Examples of the glycol ether include ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, and tripropylene glycol monomethyl ether.

Examples of the 1,2-alkanediol having 4 or more carbon atoms include 1,2-butanediol, 1,2-pentanediol, 1,2-hexanediol, and 1,2-heptanediol.

The organic solvents which are particularly preferably used are a polyhydric alcohol, and bleeding at the time of high speed printing may be suitably suppressed. Preferable examples thereof are: ethylene glycol, diethylene glycol, triethylene glycol, tetraethylene glycol, propylene glycol, dipropylene glycol, and tripropylene glycol.

The recording ink may contain one kind or two or more kinds selected from these organic solvents in combination. Further, when the recording ink contains two or more kinds of organic solvents, by making the mass ratio of the polyhydric alcohols to the total mass of the organic solvents higher than the mass ratio of the components of the organic solvents of the polyhydric alcohols, it is possible to further enhance the bleeding suppression effect, in particular, the bleeding suppression effect at the time of high-speed printing. Preferably, the mass ratio of the polyhydric alcohols to the weight of the entire organic solvent is 50% or more. When two or more kinds of polyhydric alcohols are included, it is sufficient that the sum of the mass ratios of all the polyhydric alcohols is higher than the mass ratio of any other type of organic solvent. For example, the mass ratio of the polyhydric alcohols to the mass of the entire organic solvent may be 50% or more.

The reason for this is considered as follows. The polyol component which is possessed by the composite resin particles in which the polyolefin resin is contained in the polyurethane resin in the pretreatment liquid as described above swells moderately by the polyhydric alcohols and has a high effect of increasing the dissolution and diffusion rate of the organic acid.

The content of the organic solvent in the recording ink is not particularly limited, and it is preferably in the range of 10 to 60 mass %.

The recording ink preferably contains a coagulant from the viewpoint of suppressing bleeding of an image in high-speed printing. In particular, it is preferable to use the same coagulant contained in the pretreatment liquid of the present invention as the coagulant which aggregates the pigment contained in the recording ink. The types of coagulants preferably used are as described above.

The recording ink preferably does not contain 2 mass% or more of the resin particles, and more preferably does not contain 0.1 mass% or more of the resin particles, based on the total mass of the recording ink. By setting the concentration of the resin fine particles in this range, stable ejection performance may be ensured in continuous ejection or intermittent ejection of the recording ink.

When the recording ink contains resin particles of less than 2 mass% based on the total mass of the ink, the resin particles may preferably be exemplified by resin particles having a polyurethane structure, resin particles having a polyolefin structure such as polypropylene, and resin particles having a styrene-acrylic structure. In particular, resin particles having a polyurethane structure are suitable.

When the recording ink contains resin particles, it is preferable to contain anionic resin particles as the resin particles.

When the recording ink contains resin particles, the average particle diameter of the resin particles is not particularly limited, but it is preferably in the range of 10 to 200 nm. The average particle diameter may be conveniently measured using a commercial measuring device using a light scattering method or a laser Doppler system. In addition, the dispersion of the resin fine particles may be freeze-dried, and the average particle diameter may be converted from the particles observed by a transmission microscope.

The recording ink of the present invention may also contain a surfactant. As a result, it is possible to improve the ink ejection stability and to control the spread (dot diameter) of the liquid droplet landed on the recording medium.

The surface tension of the recording ink is preferably 35 mN/m or less, more preferably 30 mN/m or less.

The surfactant that can be used in the recording ink used in the present invention may be used without any particular limitation, but when the other components of the ink contain an anionic compound, a preferable ionic property of the surfactant is an anionic, a nonionic or a betaine type.

In the present invention, the surfactant preferably used are: a fluorine-based surfactant having a high ability to reduce static surface tension, an anionic surfactant such as dioctyl sulfosuccinate having a high ability to reduce dynamic surface tension, relatively low molecular weight polyoxyethylene nonionic surfactants such as alkyl ethers, polyoxyethylene alkylphenyl ethers, acetylene glycols, pluronic surfactants, and sorbitan derivatives. It is also preferable to use a combination of a fluorine-based surfactant and a surfactant having a high ability to reduce dynamic surface tension.

The content of the surfactant in the recording ink is not particularly limited, and it is preferably in the range of 0.1 to 5.0 mass%.

In the recording ink used in the present invention, in addition to those described above, according to the purpose of improving the ejection stability, print head and ink cartridge compatibility, storage stability, image storability, and other various performances, as necessary, various additives known in the art may be used. Examples thereof are polysaccharides, viscosity modifiers, resistivity modifiers, film-forming agents, UV absorbers, antioxidants, anti-fading agents, anti-glare agents, and anti-rust agents. They are appropriately selected and used. Specific examples are: oil droplets made of such as liquid paraffin, dioctyl phthalate, tricresyl phosphate, and silicone oil; UV absorbers described in JP-A 57-74193, JP-A 57-87988, and JP-A 62-261476; antifading agents described in JP-A 57-74192, JP-A 57-87989, JP-A 60-72785, JP-A 61-146591, JP-A 1-95091 and JP-A 3-13376; fluorescent whitening agents described in JP-A 59-42993, JP-A 59-52689, JP-A 62-280069, JP-A 61-242871, and JP-A 4-219266.

The ink used in the present invention having the above configuration preferably has a viscosity of 1 to 40 mPa·s at 25 °C, and more preferably 2 to 10 mPa·s.

In the inkjet recording method of the present invention using the recording liquid set composed of the pretreatment liquid and the recording ink described above, after the surface of the recording medium is precoated with the pretreatment liquid, recording is performed on the surface of the non-absorptive film base material with the recording ink.

The method of precoating the pretreatment liquid is not particularly limited, but in order to obtain good adhesion of the recording inks, it is preferable that the amount of the composite resin particles contained in the pretreatment liquid is 0.3 g/m² or more, more preferably 0.8 g/m² or more, with respect to the recording medium. Although the application method of the pretreatment liquid on a film base material is not particularly limited, for example, a wet application method such as a roller application method, a curtain application method, a spray application method, and an ink-jet printing method may be preferably mentioned.

The inkjet head that is used in the inkjet printing method suitable for the present invention may be an on-demand system or a continuous system. Further, as a discharge method, any discharge method such as an electro-mechanical conversion method (for example, single cavity type, double cavity type, bender type, piston type, shear mode type, and shared wall type), or an electro-thermal conversion method (for example, thermal inkjet, and a bubble jet (registered trademark)) may be used.

In particular, an inkjet head (also referred to as a piezo ink-jet head) using a piezoelectric element as the electro-mechanical conversion element used in the electro-mechanical conversion system is preferable.

In view of the fact that many common base materials are distributed in the form of rolls, it is preferable to use a single-pass inkjet recording method. The effect of the present invention is particularly remarkable in the single-pass ink-jet recording method. That is, when using the single-pass inkjet recording method, high-definition images may be formed.

In the single-pass inkjet recording method, when the recording medium passes under one inkjet head unit, ink droplets are applied to all the pixels on which dots are to be formed in one pass.

It is preferable to use a line head type inkjet head as a means for achieving the single pass type inkjet recording method.

The line head type inkjet head refers to an ink-jet head having a length equal to or greater than the width of the printing area. As the line head type ink-jet head, one head may be used that is equal to or more than the width of the printing range, or a plurality of heads may be combined to be equal to or more than the width of the printing range.

Further, it is also preferable to arrange a plurality of heads side by side so that the nozzles of each other are arranged in a staggered arrangement to increase the resolution of the heads as a whole.

The conveying speed of the recording medium may be set, for example, in the range of 1 to 120 m/min. The faster the conveying speed, the faster the image forming speed. According to the present invention, the occurrence of bleeding is further suppressed even at a very high linear velocity in the range of 50 to 120 m/min, which is applicable in the single-pass inkjet image forming method, and an image having high adhesion may be obtained.

After the application of the pretreatment liquid or the recording ink, the base material may be dried. Drying may be performed by a known method such as infrared lamp drying, hot air drying, back heat drying, or reduced pressure drying. From the viewpoint of further improving the drying efficiency, it is preferable to dry the printed matter by combining two or more of these drying methods.

Hereinafter, a preferable example of the inkjet recording method and the inkjet recording apparatus of the present invention will be described.

FIG. 2 is a schematic diagram of a pretreatment-inkjet recording apparatus which is preferable in the present invention. However, the present invention is not limited to this, and for example, the first drying section may be omitted.

A non-absorptive base material F unwound from a feed roller is coated with pretreatment droplets 4 discharged from a nozzle 3 by a roll coater 2 to form a pretreatment layer P. At this time, the pretreatment layer P is dried by the first drying section 5. Next, an ink droplet 7 ejected from the inkjet head 6 is printed on the pretreatment layer P, an ink printing layer R is formed, and is wound by a winding roller 9 after drying by a second drying section 8.

### Examples

Hereinafter, the present invention will be described in detail with reference to examples, but the present invention is not limited thereto. In the examples, "parts" or "%" is used, but unless otherwise specified, it indicates "parts by mass" or "mass%".

### Example 1

### <Synthesis of Urethane polymer solution U-1>

Into a four-necked flask equipped with a stirrer, reflux condenser, thermometer and nitrogen bubbler, 182.0 parts by mass of polyester polyol (trade name Teslac 2461, manufactured by Hitachi Chemical Co., Ltd.), 22.0 parts by mass of polyethylene glycol (PEG, molecular weight 600, trade name PEG 600, Daiichi Kogyo Seiyaku Co., Ltd.), 5.6 parts by mass of trimethylol propane, 43.8 parts by mass of N-methyl-N,N-diethanolamine, 204 parts by mass of 4,4'-dicyclohexylmethane diisocyanate, and 216 parts by mass of methyl ethyl ketone (MEK) were loaded (added amount of tertiary amine: 9.6 mass%; and added amount of PEG: 4.8 mass%). The reaction was carried out while maintaining the reaction mixture at 75 °C to obtain a urethane prepolymer.

Then, 46.4 parts by mass of dimethyl sulfate was added to this urethane prepolymer, and the mixture was reacted at 50 to 60 °C for 30 to 60 minutes. Thus, a methyl ethyl ketone solution U-1 of a cationic urethane prepolymer having an NCO content of 2.2% and a nonvolatile content of about 50 mass% was obtained.

### <Synthesis of Urethane polymer solution U-2>

Into a four-necked flask equipped with a stirrer, reflux condenser, thermometer and nitrogen bubbler, 182.0 parts by mass of polycarbonate polyol (molecular weight 1000, trade name Nippolan 981, Nippon Polyurethane Industries Co., Ltd.), 22.0 parts by mass of polyethylene glycol (PEG, molecular weight 600, trade name PEG 600, Daiichi Kogyo Seiyaku Co., Ltd.), 5.6 parts by mass of trimethylol propane, 43.8 parts by mass of N-methyl-N,N-diethanolamine, 204 parts by mass of 4,4'-dicyclohexylmethane diisocyanate, and 216 parts by mass of methyl ethyl ketone (MEK) were loaded (added amount of tertiary amine: 9.6 mass%; and added amount of PEG: 4.8 mass%). The reaction was carried out while maintaining the reaction mixture at 75 °C to obtain a urethane prepolymer.

Then, 46.4 parts by mass of dimethyl sulfate was added to this urethane prepolymer, and the mixture was reacted at 50 to 60 °C for 30 to 60 minutes. Thus, a methyl ethyl ketone solution U-2 of a cationic urethane prepolymer having an NCO content of 2.2% and a nonvolatile content of about 50 mass% was obtained.

### <Synthesis of Urethane polymer solution U-3>

Into a four-necked flask equipped with a stirrer, reflux condenser, thermometer and nitrogen bubbler, 182.0 parts by mass of polyether polyol (PolyTHF2000, BASF Corporation), 22.0 parts by mass of polyethylene glycol (PEG, molecular weight 600, trade name PEG 600, Daiichi Kogyo Seiyaku Co., Ltd.), 5.6 parts by mass of trimethylol propane, 43.8 parts by mass of N-methyl-N,N-diethanolamine, 204 parts by mass of 4,4'-dicyclohexylmethane diisocyanate, and 216 parts by mass of methyl ethyl ketone (MEK) were loaded (added amount of tertiary amine: 9.6 mass%; and added amount of PEG: 4.8 mass%). The reaction was carried out while maintaining the reaction mixture at 75 °C to obtain a urethane prepolymer.

Then, 46.4 parts by mass of dimethyl sulfate was added to this urethane prepolymer, and the mixture was reacted at 50 to 60 °C for 30 to 60 minutes. Thus, a methyl ethyl ketone solution U-3 of a cationic urethane prepolymer having an NCO content of 2.2% and a nonvolatile content of about 50 mass% was obtained.

### <Preparation of Composite resin particle dispersion (1)>

Into a four-necked flask equipped with a stirrer, reflux condenser, thermometer and nitrogen bubbler, 80.0 parts by mass of polyolefin resin (trade name: AUROREN 150S, manufactured by Nippon Paper Industries Co., Ltd.), 240.0 parts by mass of methylcyclohexane, and 48.0 parts by mass of methyl ethyl ketone were loaded. The temperature of the mixture was raised to 80 °C and dissolved by heating. After dissolution, the internal temperature was kept at 40 °C, and 40.0 parts by mass of a urethane prepolymer solution A-1 (nonvolatile content: about 50%) was added and mixed. 58.0 parts by mass of water was added to this solution and emulsified using a homogenizer. Thereafter, 570 parts by mass of water was gradually added and diluted, and an aqueous solution in which 1.0 parts by mass of ethylene diamine and 12 parts by mass of water were mixed was gradually added thereto, and the mixture was stirred for 1 hour to perform polymerization. The solvent was removed under reduced pressure at 50 °C to obtain a composite resin particle dispersion (1) having a nonvolatile content (solid content as particles) of about 30 mass%.

In Table I and Table II, the above-described AUROREN 150S is referred to as PO-1.

Similarly, a composite resin particle dispersion in which a polyolefin resin was contained in a polyurethane resin was prepared according to the type and blending ratio of the urethane polymer solutions described in Table I and Table II.

### [Preparation of Pretreatment liquid 1]

The following additives were sequentially added with stirring, and then filtered through a 5.0 µm filter to obtain a pretreatment liquid. There was no substantial change in composition before and after filtration.

| | |
|---|---|
| Composite resin particle dispersion-1 (Composite resin particle dispersion obtained by emulsifying and dispersing a polyurethane resin (U) and a polyolefin resin (O) at a mass ratio (U/O) of 97/3 and a solid content of 30 mass%, by using urethane polymer solution U-1 and AUROREN150S as a polyolefin resin solution): | 14.0 parts by mass |
| Coagulant (Cationic polymer PAS-1, made by Nittobo Medical Co.,Ltd.): | 5.0 parts by mass |
| Ion-exchanged water (amount that the total amount becomes 100 parts by mass): | 81.0 parts by mass |

### [Preparation of Pretreatment liquids 2 to 36]

Pretreatment liquids 2 to 36 were prepared in the same manner as described above except that the type of the composite resin particle dispersion and the type and addition amount of the coagulant were changed as indicated in Table I and Table II.

### [Preparation of Pretreatment liquids 37 to 40 of Comparative examples]

Pretreatment liquids 37 to 40 of comparative examples were prepared by mixing polyurethane resins using JK-870 (manufactured by Meisei Chemical Industries Co., Ltd.) and polyolefin resins using Arrowbase CB-1010 (manufactured by Unitika Ltd.) without emulsifying in the amounts indicated in Tables II, and then adding coagulants.

[Preparation of Comparative pretreatment liquids 41 and 42] Pretreatment liquid 41 of a comparative example in which no coagulant was added was prepared under the condition of the pretreatment liquid 1.

Further, a pretreatment liquid 42 of a comparative example in which only coagulant and water were mixed was prepared.

<Preparation of Inkjet recording ink>

### [Preparation of Pigment dispersion liquid (1)]

A mixed liquid containing 18 mass% of pigment (pigment blue 15:3), 31.5 mass% of pigment dispersant (acrylic dispersant having a carboxy group neutralized with sodium hydroxide, Joncryl 819 manufactured by BASF Co., acid valence 75 mgKOH/g, solid content 20 mass%), 20 mass% of ethylene glycol, and ion exchange water (remaining amount; total amount becomes 100 mass%) was premixed. Thereafter, the mixed liquid was dispersed by using a sand grinder filled with 0.5 mm zirconia beads in an amount of 50% volume ratio. A pigment dispersion liquid (1) having a pigment content of 18 mass% was prepared.

The average particle diameter of the pigment particles contained in this pigment dispersion liquid (1) was 109 nm. The average particle diameter was measured by a "Zetasizer 1000HS" manufactured by Malvern Corporation.

### [Preparation of Recording ink]

While stirring 29.8 parts by mass of the pigment dispersion liquid (1) prepared above, the following additives were sequentially added to prepare an ink composition, which was then filtered through a 0.8 µm filter to obtain a recording ink. There was no substantial change in composition before and after filtration.

| | |
|---|---|
| Pigment dispersion liquid (1): | 29.8 parts by mass |
| Ethylene glycol: | 15.0 parts by mass |
| Propylene glycol: | 10.0 parts by mass |
| Silicone surfactants (Shin-Etsu Chemical Co., Ltd., KF-351A): | 0.2 parts by mass |
| Ion-exchanged water: | Amount that the total amount becomes 100 parts by mass |

### «Evaluation»

Each evaluation was performed according to the following method using the prepared pretreatment liquids 1 to 42 and the prepared inkjet recording ink.

### (Storage Stability of Pretreatment liquid)

The average particle size of the resin particles in the pretreatment liquid after storage at 60 °C for one week was measured using a particle size measuring instrument "Zetasizer 1000HS" manufactured by Malvern Corporation. The particle size increase rate was obtained from the following formula (the storage stability is better if the numerical value is close to 100%), and the particle size was evaluated according to the following criteria.
AA: Particle size increase rate is less than 130%
BB: Particle size increase rate is 130% or more and less than 140%
CC: Particle size increase rate is 140% or more and less than 150%
DD: Particle size increase rate is 150% or more

Particle size increase rate (%) = [Average particle size after storage (particle size after storage at 60 °C for 1 week)/Average particle size before storage] x 100

### (Preparation of Print samples)

By a roller-coating method illustrated in FIG. 2, the pretreatment liquids 1 to 42 were applied to recording media described below in a wet film thickness of 9 µm so as to have a weight 1.5 g/m² of the resin solids content, and then dried for 5 minutes in warm air at 70 °C to prepare the recording media.

Polyethylene film (PE film) Taiyo FE #50-FE2001 (manufactured by Futamura Chemical Co., Ltd.) was used as the base material. On the corona-treated surface of the above base material, pretreatment liquids 1 to 42 were coated with a #3 wire bar and dried. Two independent drive heads (360 dpi, ejection volume 14 pL) of a piezo-type inkjet head manufactured by Konica Minolta, Inc. were arranged so that the nozzles were alternately arranged, and a head module of 720 dpi x 720 dpi was manufactured, and the nozzle rows were installed on the stage conveyer so as to be orthogonal to the conveyance direction. Next, after the process liquid was applied, ink droplets were ejected so that solid images of 720 dpi x 720 dpi having 11.2 mL/m² amounts of ink were formed. After the ejection, the ink landed on each base material was dried on a hot plate at 120 °C for about 3 minutes to obtain a solid image.

The environment at the time of inkjet printing was room temperature 25 °C, and the temperature of the recording medium was also set to 25 °C.

The image formed as described above was evaluated for blooming suppression property, ink bleeding prevention, and ink adhesiveness.

### (Evaluation of Blooming suppression property)

The solid image of 5 cm x 5cm formed on the recording medium was stored in an environment of 60 °C for one month. The Image after storage were visually observed, and blooming suppression property was evaluated according to the following criteria.
AA: No deposits are observed on the surface of the image.
BB: Almost no deposits are observed on the surface of the image.
CC: Thin precipitates exist on the image surface, which can be visually confirmed.
DD: The surface of the image is covered with substance on the powder and can be visually confirmed.

Evaluations AA, BB, and CC were accepted for practical use.

### (Evaluation of Ink bleeding (image quality))

The cut characters of the image produced above were evaluated according to the following criteria based on the character size that can be recognized at a distance of 30 cm without blurring by bleeding.
AA: All characters can be reproduced without collapsing details.
BB: 5-point characters show crushing details, but are sufficiently readable, and 7-point characters and cut characters can be reproduced without collapsing.
CC: 5-point characters show collapse, difficult to read, 7-point letters show collapse of detail, and cut characters show collapse.
DD: Details are collapsed with 7-point characters or cut characters.

Evaluations AA, BB, and CC were acceptable for practical use.

### (Evaluation of Ink adhesiveness)

In the solid image of the image thus formed, a tape peeling test was performed by a cross-cutting method in which the image was cut with a cutter in a grid pattern of 5 x 5 at intervals of 1 mm, and the results were evaluated according to the following criteria.
AA: Good without peeling off by tape
BB: Although 1 to 3 grid cuts are peeled off, it is at a good level.
CC: Although 4 to 6 grid cuts are peeled off, the level is acceptable for practical use.
DD: 7 or more grid cuts are peeled off at a practically unacceptable level.

Evaluations AA, BB, and CC were acceptable for practical use.

The composition and evaluation results of the above-mentioned pretreatment liquids are indicated in Table I and Table II below.

**Table I**

| *1 | Inkjet ink pretreatment liquid composition | | | | | | | | | | Evaluation | | | | Remarks |
|---|---|---|---|---|---|---|---|---|---|---|---|---|---|---|---|
| | Resin particle (composite resin particle) | | | | Coagulant | | | | | Water (part by mass) | Storage stability | Blooming suppression property | Ink bleeding (image quality) | *2 | |
| | Urethane polymer solution (U) | Polyolefin resin (O) | Emulsified dispersion (U/O) | Composition (part by mass) | Cationic polymer | Metal chelate | Polyvalent metal salt | Organic acid | Composition (part by mass) | | | | | | |
| 1 | U-1 | P0-1 | 97/ 3 | 14.0 | PAS-1 | - | - | - | 5.0 | 81.0 | CC | CC | BB | CC | *3 |
| 2 | U-1 | P0-1 | 97/ 3 | 14.0 | - | Zr acetate | - | - | 5.0 | 81.0 | CC | CC | BB | CC | *3 |
| 3 | U-1 | P0-1 | 35/65 | 14.0 | PAS-1 | - | - | - | 5.0 | 81.0 | CC | CC | BB | BB | *3 |
| 4 | U-1 | P0-1 | 35/65 | 14.0 | - | Zr acetate | - | - | 5.0 | 81.0 | CC | CC | BB | BB | *3 |
| 5 | U-1 | P0-1 | 40/60 | 14.0 | PAS-1 | - | - | - | 5.0 | 81.0 | BB | CC | BB | BB | *3 |
| 6 | U-1 | P0-1 | 40/60 | 14.0 | - | Zr acetate | - | - | 5.0 | 81.0 | BB | CC | BB | BB | *3 |
| 7 | U-1 | P0-1 | 50/50 | 14.0 | PAS-1 | - | - | - | 5.0 | 81.0 | BB | CC | BB | BB | *3 |
| 8 | U-1 | P0-1 | 50/50 | 14.0 | - | Zr acetate | - | - | 5.0 | 81.0 | BB | CC | BB | BB | *3 |
| 9 | U-1 | P0-1 | 60/40 | 14.0 | PAS-1 | - | - | - | 5.0 | 81.0 | BB | CC | BB | BB | *3 |
| 10 | U-1 | P0-1 | 60/40 | 14.0 | - | Zr acetate | - | - | 5.0 | 81.0 | BB | CC | BB | BB | *3 |
| 11 | U-1 | P0-1 | 70/30 | 14.0 | PAS-1 | - | - | - | 5.0 | 81.0 | BB | CC | BB | BB | *3 |
| 12 | U-1 | P0-1 | 70/30 | 14.0 | - | Zr acetate | - | - | 5.0 | 81.0 | BB | CC | BB | BB | *3 |
| 13 | U-1 | P0-1 | 80/20 | 14.0 | PAS-1 | - | - | - | 5.0 | 81.0 | BB | CC | BB | BB | *3 |
| 14 | U-1 | P0-1 | 80/20 | 14.0 | - | Zr acetate | - | - | 5.0 | 81.0 | BB | CC | BB | BB | *3 |
| 15 | U-1 | P0-1 | 90/10 | 14.0 | PAS-1 | - | - | - | 5.0 | 81.0 | BB | CC | BB | BB | *3 |
| 16 | U-1 | P0-1 | 90/10 | 14.0 | - | Zr acetate | - | - | 5.0 | 81.0 | BB | CC | BB | BB | *3 |
| 17 | U-1 | P0-1 | 95/ 5 | 14.0 | PAS-1 | - | - | - | 5.0 | 81.0 | BB | CC | BB | BB | *3 |
| 18 | U-1 | P0-1 | 95/ 5 | 14.0 | - | Zr acetate | - | - | 5.0 | 81.0 | BB | CC | BB | BB | *3 |
| 19 | U-2 | P0-1 | 40/60 | 14.0 | PAS-1 | - | - | - | 5.0 | 81.0 | BB | BB | BB | BB | *3 |
| 20 | U-3 | P0-1 | 40/60 | 14.0 | - | Zr acetate | - | - | 5.0 | 81.0 | BB | BB | BB | BB | *3 |
| 21 | U-2 | P0-1 | 80/20 | 14.0 | PAS-1 | - | - | - | 5.0 | 81.0 | BB | BB | BB | BB | *3 |
| 22 | U-3 | P0-1 | 80/20 | 14.0 | - | Zr acetate | - | - | 5.0 | 81.0 | BB | BB | BB | BB | *3 |
| 23 | U-2 | P0-1 | 90/10 | 14.0 | PAS-1 | - | - | - | 5.0 | 81.0 | BB | BB | BB | BB | *3 |
| 24 | U-3 | P0-1 | 90/10 | 14.0 | - | Zr acetate | - | - | 5.0 | 81.0 | BB | BB | BB | BB | *3 |

| | | | | | | | | | | | | | | | |
|---|---|---|---|---|---|---|---|---|---|---|---|---|---|---|---|
| *1: Pretreatment liquid No. *2: Ink adhesiveness *3: Present invention | | | | | | | | | | | | | | | |

**Table II**

| *1 | Inkjet ink pretreatment liquid composition | | | | | | | | | | Evaluation | | | | Remarks |
|---|---|---|---|---|---|---|---|---|---|---|---|---|---|---|---|
| | Resin particle (composite resin particle) | | | | Coagulant | | | | | Water (part by mass) | Storage stability | Blooming suppression property | Ink bleeding (image quality) | *2 | |
| | Urethane polymer solution (U) | Polyolefin resin (O) | Emulsified dispersion (U/O) | Composition (part by mass) | Cationic polymer | Metal chelate | Polyvalent metal salt | Organic acid | Composition (part by mass) | | | | | | |
| 25 | U-2 | P0-1 | 40/60 | 14.0 | - | - | Ca chloride | - | 5.0 | 81.0 | BB | AA | AA | BB | *3 |
| 26 | U-3 | P0-1 | 40/60 | 14.0 | - | - | - | Malonic acid | 5.0 | 81.0 | BB | AA | AA | BB | *3 |
| 27 | U-2 | P0-1 | 80/20 | 14.0 | - | - | Ca chloride | - | 5.0 | 81.0 | BB | AA | AA | BB | *3 |
| 28 | U-3 | P0-1 | 80/20 | 14.0 | - | - | - | Malonic acid | 5.0 | 81.0 | BB | AA | AA | BB | *3 |
| 29 | U-2 | P0-1 | 90/10 | 14.0 | - | - | Ca chloride | - | 5.0 | 81.0 | BB | AA | AA | BB | *3 |
| 30 | U-3 | P0-1 | 90/10 | 14.0 | - | - | - | Malonic acid | 5.0 | 81.0 | BB | AA | AA | BB | *3 |
| 31 | U-2 | P0-1 | 50/50 | 14.0 | - | - | Ca chloride | - | 5.0 | 81.0 | AA | AA | AA | BB | *3 |
| 32 | U-2 | P0-1 | 50/50 | 14.0 | - | - | - | Malonic acid | 5.0 | 81.0 | AA | AA | AA | BB | *3 |
| 33 | U-2 | P0-1 | 60/40 | 14.0 | - | - | Ca chloride | - | 5.0 | 81.0 | AA | AA | AA | BB | *3 |
| 34 | U-2 | P0-1 | 60/40 | 14.0 | - | - | - | Malonic acid | 5.0 | 81.0 | AA | AA | AA | BB | *3 |
| 35 | U-2 | P0-1 | 70/30 | 14.0 | - | - | Ca chloride | - | 5.0 | 81.0 | AA | AA | AA | BB | *3 |
| 36 | U-2 | P0-1 | 70/30 | 14.0 | - | - | - | Malonic acid | 5.0 | 81.0 | AA | AA | AA | BB | *3 |
| 37 | JK-870 | CB-1010 | - | 0.7/13.3 | - | - | Ca chloride | - | - | 81.0 | DD | DD | CC | CC | *4 |
| 38 | JK-870 | CB-1010 | - | 5.6/8.4 | - | - | Ca chloride | - | - | 81.0 | DD | DD | CC | BB | *4 |
| 39 | JK-870 | CB-1010 | - | 7.0/7.0 | PAS-1 | - | Ca chloride | - | 5.0/5.0 | 76.0 | DD | DD | CC | BB | *4 |
| 40 | JK-870 | CB-1010 | - | 7.0/ 7.0 | - | - | - | - | - | 86.0 | DD | DD | DD | BB | *4 |
| 41 | U-1 | P0-1 | 97/ 3 | 14.0 | - | - | - | - | - | 86.0 | BB | BB | DD | CC | *4 |
| 42 | - | - | - | - | - | - | - | Malonic acid | 5.0 | 95.0 | BB | DD | BB | DD | *4 |

| | | | | | | | | | | | | | | | |
|---|---|---|---|---|---|---|---|---|---|---|---|---|---|---|---|
| *1: Pretreatment liquid No. *2: Ink adhesiveness *3: Present invention *4: Comparative example | | | | | | | | | | | | | | | |

It was confirmed that the pretreatment liquids 1 to 36 of the present invention using the composite resin particle dispersion in which the polyolefin resin was contained in the polyurethane resin had high storage stability of the pretreatment liquid itself as compared with the pretreatment liquids 37 to 42 of the comparative example, and were excellent in blooming suppression property, ink bleeding prevention, and ink adhesiveness of the image even when high-speed inkjet printing was performed on the non-absorbent base material (PE film) to which the pretreatment liquid of the present invention was applied.

### Example 2

In the same manner as in Example 1, the evaluation of blooming suppression property, ink bleeding prevention, and ink adhesiveness to the substrate were evaluated by using the following film substrates instead of non-absorptive PE film. The used film substrates were OPP-1: biaxially oriented polypropylene film (AF-642, 20 µm thick, double-sided corona treatment, with anti-fogging treatment on both sides, made by Futamura Chemical Co., Ltd.), OPP-2: biaxially oriented polypropylene film (FOS-BT, 30 µm thick, and double-sided corona treatment, without anti-fogging treatment, manufactured by Futamura Chemical Co., Ltd.), PET: biaxially oriented polyester film (E-5200, 25 µm thick, double-sided corona treatment, without anti-fogging treatment, manufactured by Toyobo Corporation), and printed coated paper: cast coated paper (mirror coated platinum, a basis weight 157 g/m²). Even when high-speed inkjet printing was performed on a non-absorptive substrate coated with the pretreatment liquid of the present invention, it was confirmed that the blooming suppression property, ink bleeding prevention, and ink adhesiveness of the image were excellent compared with the pretreatment liquid of the comparative example.

### Example 3

Instead of the polyolefin resin (AUROREN 150S, manufactured by Nippon Paper Industries Co., Ltd.) used in the pretreatment liquid 1-36 prepared in Example 1, polyolefin resin: HARDLEN Na-1001 (manufactured by Toyo Kasei Co., Ltd.) or SUPERCHLON E-415 (manufactured by Nippon Paper Industries Co., Ltd.) was used to prepare composite resin particle dispersions in which the polyolefin resin was emulsified in the polyurethane resin, similarly to the pretreatment liquid 1-36.

The obtained pretreatment liquids corresponding to the above-mentioned pretreatment liquids 1 to 36 reproduced Example 1 and had excellent storage stability. In addition, it was confirmed that the non-absorptive base material (PE film) to which the obtained pretreatment liquid was applied was excellent in blooming suppression property, ink bleeding prevention, and ink adhesiveness of the image even when high-speed inkjet printing was performed.

### Industrial Applicability

The inkjet pretreatment liquid of the present invention is excellent in storage stability and excellent in blooming suppression property, ink bleeding, and ink adhesiveness when inkjet printing is performed on a non-absorptive base material, so that it is possible to provide a pretreatment liquid suitable for inkjet printing on a non-absorptive flexible packaging base material.

### Description of Symbols

- F:: Base material
- P:: Pretreatment layer
- R:: Printed layer
- 1:: Feed roller
- 2:: Roll coater
- 3:: Nozzle
- 4:: Pretreatment droplet
- 5:: First drying section
- 6:: Inkjet head
- 7:: Ink droplet
- 8:: Second drying section
- 9:: Take-up roller
- 10:: Pretreatment-inkjet recording apparatus

## Claims

1. A pretreatment liquid for inkjet recording containing at least water-insoluble resin particles, a coagulant and water, wherein the water-insoluble resin particles contain a composite resin in which a polyolefin resin is contained in a polyurethane resin.

2. The pretreatment liquid for inkjet recording described in claim 1, wherein the water-insoluble resin particles contain a composite resin in which a polyolefin resin is emulsified in a polyurethane resin.

3. The pretreatment liquid for inkjet recording described in claim 1 or 2, wherein a value of a mass ratio (U/O) of the polyurethane resin (U) and the polyolefin resin (O) in the composite resin particles is in the range of 40/60 to 95/5.

4. The pretreatment liquid for inkjet recording described in any one of claims 1 to 3, wherein a polyol component of the polyurethane resin has a carbonate group or an ether group.

5. The pretreatment liquid for inkjet recording described in any one of claims 1 to 4, wherein the coagulant is a polyvalent metal salt or an organic acid.

6. An inkjet recording liquid set comprising a pretreatment liquid for inkjet recording and an inkjet recording ink containing at least a pigment, an organic solvent, and water, wherein the pretreatment liquid for inkjet recording is one described in any one of claims 1 to 5, and the coagulant contained in the pretreatment liquid for inkjet recording is a substance which coagulates a pigment contained in the inkjet recording ink.

7. A method of producing the pretreatment liquid for inkjet recording described in any one of claims 1 to 5, comprising the steps of:
forming composite resin particles by emulsifying and dispersing a polyolefin resin and a polyurethane resin; and
mixing the composite resin particles and the coagulant.

8. A printed material comprising a printed layer formed using an inkjet recording ink on a pretreatment layer formed using the pretreatment liquid for inkjet recording described in any one of claims 1 to 5 on a non-absorptive film base material.

9. An inkjet recording method comprising the step of forming an image on a non-absorptive film base material using the pretreatment liquid for inkjet recording described in any one of claims 1 to 5 or the inkjet recording liquid set described in claim 6.
